# EUROPÄISCHE PATENTSCHRIFT

(11) **EP 2 914 090 B1**
(45) Veröffentlichungstag und Bekanntmachung des Hinweises auf die Patenterteilung: **18.04.2018**
(21) Anmeldenummer: 13814014.0
(22) Anmeldetag: 23.10.2013
(51) Int. Cl.: A01G 7/00

(54) **PFLANZENGEWINNUNG UND AUSPFLANZUNG VON MISCANTHUS**
PLANT RECOVERY AND PLANTING OF MISCANTHUS
PRODUCTION DE PLANTES ET REPIQUAGE DE MISCANTHUS

(30) Priorität: 31.10.2012 DE 102012110420
(43) Veröffentlichungstag der Anmeldung: 09.09.2015
(73) Patentinhaber: Dreher, Ingo, 78582 Balgheim (DE)
(72) Erfinder: Dreher, Ingo, 78582 Balgheim (DE)
(74) Vertreter: Wickord, Wiro
(86) Internationale Anmeldenummer: PCT/DE2013/100365
(87) Internationale Veröffentlichungsnummer: WO 2014/067513

(56) Entgegenhaltungen:
- DE-A1- 4 310 381
- DE-A1-102007 040 512
- Kühn: "Herzlich willkommen", Buscheritz, 8. Februar 2012 (2012-02-08), Seiten 1-25, XP055116725, Gefunden im Internet: URL:http://www.biomasse-freiberg.de/filead min/downloads/2012_02_08_Kuehn_Miscanthus. pdf [gefunden am 2014-05-07]

## Beschreibung

Die Erfindung betrifft ein Verfahren nach dem Oberbegriff des Patentanspruchs 1. Ein solches Verfahren ist aus DE 4310381 bekannt. Ferner betrifft die Erfindung einen Formkörper, der aus Erdreich und wenigstens einem vollständig enthaltenen Rhizom der Miscanthuspflanze gebildet ist.
Bei der landwirtschaftlichen Erzeugung von Biomasse hat die Miscanthuspflanze eine stetig wachsende Bedeutung. Das Großgras wächst im Jahresverlauf bis zu 4 m und trocknet dann über die Wintermonate ab. Im Frühjahr kann das Gras geerntet und als Biomasse verwendet werden. Miscanthus ist eine Dauerkultur, die über 20 Jahre jährlich genutzt werden kann und Ertrag abwirft. Die Pflanzgutgewinnung und Anpflanzung von Miscanthus kann heute nach zwei Verfahren erfolgen. Bei einem ersten Verfahren werden in einem In-Vitro-Labor gekreuzte, vorgezogene, ca. 20 cm große Jungpflanzen ausgepflanzt. Dieses Vorgehen ist vergleichsweise teuer aufgrund der aufwendigen Aufzucht. Beim zweiten Verfahren werden einzelne Wurzeln der Miscanthuspflanze, sogenannte Rhizome, in das Erdreich eingesetzt. Aus den Rhizomen wächst dann die Miscanthuspflanze. Zur Gewinnung der Rhizome wird eine abgeerntete Anbaufläche vorzugsweise mit einem Grubber oder einer Egge bearbeitet. Hierbei lösen sich die Rhizome aus dem Erdreich und können aufgesammelt werden. Da es sich bei Miscanthus um eine wurzelwuchernde Pflanze handelt, kann aus den auf diese Weise gewonnenen Rhizomen eine etwa fünfmal größere Anbaufläche hergestellt werden. Jedoch ist die Vermehrung auf Basis der Rhizome arbeitsintensiv. Bei beiden Anbaumethoden erfolgt die Ausbringung der Jungpflanze bzw. Rhizome in einem regelmäßigen Raster. Der Abstand der Jungpflanzen bzw. Rhizome soll hierbei vorzugsweise 1 m im Quadrat betragen. Nachteilig bei dem bekannten Verfahren zur Pflanzgutgewinnung und Anpflanzung von Miscanthus ist, dass insbesondere im ersten Jahr hohe Auswinterungsverluste zu beklagen sind und demzufolge der Biomasseertrag gering ist. Überdies ist die Pflanzgutgewinnung mit hohen Kosten verbunden bzw. arbeitsaufwendig.

Aufgabe der vorliegenden Erfindung ist insofern die Verbesserung der Pflanzgutgewinnung und Anpflanzung von Miscanthus.

Zur Lösung der Aufgabe weist die Erfindung die Merkmale des Patentanspruchs 1 auf.

Der besondere Vorteil der Erfindung besteht darin, dass Miscanthus mithilfe des aus Erde und wenigstens einem Rhizom gebildeten Formkörpers in besonders kostengünstiger Weise vermehrt werden kann. Insbesondere erübrigt sich die Kreuzung der Pflanzen im In-Vitro-Labor und deren Aufzucht bzw. die arbeitsintensive Gewinnung der einzelnen Rhizome. Überdies hat sich gezeigt, dass die Anwuchsrate überraschend hoch ist und die Auswinterungsverluste im ersten Jahr unterdurchschnittlich sind.

Die Erfindung schlägt insofern ein grundlegend neues Verfahren für die Pflanzgutgewinnung und der Anpflanzung von Miscanthus vor. Der Formkörper, der beispielsweise eine Quaderform, eine Zylinderform oder eine Kegelstumpfform aufweisen kann, tritt hierbei an die Stelle der Jungpflanzen bzw. separierten Rhizome.

Nach einer bevorzugten Ausführungsform der Erfindung werden die Formkörper aus einem in der Anbaufläche gebildeten Rhizomcluster herausgetrennt. Da es sich bei Miscanthus um eine wurzelwuchernde Pflanze handelt, bildet sich auf der Anbaufläche innerhalb weniger Jahre oberflächennah ein von Wurzeln durchsetzter Bereich aus. In einem Durchmesserbereich 60 cm um die ursprüngliche Pflanzung sind demzufolge zahlreiche Rhizome vorhanden, die zur Pflanzgutgewinnung und Neuanpflanzung dienen können. Aus eben diesen Bereichen, den sogenannten Rhizomcluster, werden die Formkörper gewonnen. Vorteilhaft erfolgt die Gewinnung der Formkörper demzufolge unmittelbar von einer bereits bestehenden Anbaufläche. Die Formkörper sind demzufolge Abfallprodukte der Normbewirtschaftung der Anbaufläche. Eine gesonderte Aufzucht oder Gewinnung in Gärtnereien oder speziellen Betrieben ist entbehrlich.

Nach einer Weiterbildung der Erfindung werden die Außenabmessungen des Formkörpers so gewählt, dass in dem Formkörper mit einer ausreichend hohen Wahrscheinlichkeit wenigstens ein unbeschädigtes, vollständig erhaltenes Rhizom der Miscanthuspflanze enthalten ist. Feldversuche haben hierbei gezeigt, dass bei einem beispielsweise quaderförmigen Formkörper eine Kantenlänge von 10 bis 20 cm ausreichend ist, um nahezu sicher wenigstens ein unbeschädigtes Rhizom in dem Formkörper zu finden. Bevorzugt wird eine Würfelgeometrie mit einer Kantenlänge von 15 cm verwendet. Ein Rhizom ist dabei gebildet aus einem Wurzelhauptkörper, der im Wesentlichen das Volumen des Rhizoms definiert und etwa daumengroß ist sowie aus von dem Wurzelhauptkörper abragende Haarwurzeln, die insbesondere der Nährstoffaufnahme und der Versorgung des Rhizoms mit Wasser dienen. Vorteilhaft verbessert sich die Anwuchswahrscheinlichkeit und reduzieren sich die Auswinterungsverluste, wenn ein vollständig erhaltenes Rhizom mit Wurzelhauptkörper und Haarwurzeln in dem Formkörper eingeschlossen ist.

Nach einer Weiterbildung der Erfindung werden zur Gewinnung von regelmäßig geformten Formkörpern wenigstens zwei im Wesentlichen parallel zueinander orientierte Längsschnitte und dann eine Mehrzahl von ebenfalls im Wesentlichen parallelen Querschnitten in das Erdreich eingebracht. Die Längsschnitte sowie die Querschnitte weisen eine vorbestimmte Mindesttiefe auf und sind einander kreuzend angeordnet. Weiter wird ein Grundschnitt ausgeführt, wobei durch den Grundschnitt eine Unterseite des Formkörpers ausgebildet wird, die einer durch eine Oberfläche der Anbaufläche gebildeten Oberseite des Formkörpers gegenüberliegt. Vorteilhaft kann auf diese Weise der Formkörper besonders einfach hergestellt werden. Insbesondere die regelmäßige Form des Formkörpers erlaubt einen hohen Grad an Automatisierbarkeit und gute Logistikeigenschaften. Beispielsweise kann ein im Wesentlichen quaderförmiger Formkörper hergestellt werden, wenn die Längs- und Querschnitte zueinander senkrecht orientiert sind und der Grundschnitt im Wesentlichen parallel zur Oberfläche der Anbaufläche erfolgt.

Sofern im Rahmen der Erfindung geometrische Formen, beispielsweise Quaderform, Zylinderform, Kegelstumpfform zur Beschreibung der Geometrie verwendet werden oder die relative Lage von Flächen, Schnitten oder dergleichen zueinander dargelegt wird, ist bei dem Maß der geforderten Genauigkeit bzw. Entsprechung der landwirtschaftliche Anwendungsbereich zu berücksichtigen und ein großzügiger Maßstab anzulegen. Eine Quaderform ist beispielsweise dann gegeben, wenn im Rahmen der Arbeitsgenauigkeit landwirtschaftlicher Maschinen oder manueller Gartenarbeit die gegenüberliegenden Seitenflächen im Wesentlichen parallel zueinander orientiert sind. Ebenso ist bei der Beurteilung der Parallelität oder anderer geometrischer Spezifikationen jeweils auf die besonderen Arbeitsverfahren und Arbeitsmaschinen in der Landwirtschaft abzustellen. Eine Quaderform im Sinne der Anmeldung ist beispielsweise auch dann gegeben, wenn im Rahmen der Bearbeitung, der Trocknung, des nachgelagerten Transports oder der Lagerung des Formkörpers Ecken bzw. Kanten abbrechen bzw. verformt werden.

Nach einer Weiterbildung der Erfindung werden die Längsschnitte und/oder die Querschnitte und/oder der Grundschnitt mit einer landwirtschaftlichen Fräse, mit einem Pflug oder mit einer Schneide ausgebildet. Vorteilhaft kann durch das Verwenden dieser Geräte der landwirtschaftliche Fuhrpark, über den ein Betrieb ohnehin verfügt, für die Pflanzgutgewinnung und Anpflanzung von Miscanthus genutzt werden. Es entstehen keine hohen Investitionskosten. Zudem kann die Bearbeitung wirtschaftlich erfolgen, da innerhalb kurzer Zeit eine Vielzahl von Formkörpern hergestellt wird. Dabei stellt die Verwendung einer Fräse, eines Pflugs oder einer Schneide eine grundlegende Abkehr von den heutigen Bearbeitungsmethoden dar. Stand der Wissenschaft und Technik ist vielmehr, die Rhizome mit dem Grubber oder einer ähnlichen Bearbeitungsmaschine aus dem Erdreich zu reißen. Explizit wird davon abgeraten, die Rhizome mit einer Schneide zu lösen, da andernfalls die Gefahr einer Beschädigung des Rhizoms überwiegen und den Erfolg der Pflanzgutgewinnung infrage stellt.

Nach einer Weiterbildung der Erfindung wird die Mindesttiefe für den Längsschnitt und den Querschnitt so gewählt, dass die Unterseite des Formkörpers unterhalb einer üblichen Wuchstiefe des Rhizomclusters ausgebildet wird. Vorteilhaft erhöht sich hierdurch die Wahrscheinlichkeit das Rhizom mit seinen Haarwurzeln vollständig zu erhalten. Insbesondere verbessert sich die Möglichkeit zur Auspflanzung des Formkörpers, und Verluste insbesondere im ersten Jahr werden reduziert bzw. vermieden. Versuche haben gezeigt, dass eine Schnitttiefe von 15 cm in der Regel ausreicht, da die übliche Wuchstiefe des Rhizomclusters etwa 10 bis 12 cm beträgt. Lokale Abweichungen bei der Wuchstiefe haben hierbei nur einen geringen Einfluss auf die Anwuchswahrscheinlichkeit bzw. Auswinterungsverluste der Miscanthuspflanze. Dies gilt auch, wenn das Rhizom im Bereich einzelner Haarwurzeln geringfügig beschädigt wird.

Nach einer Weiterbildung der Erfindung wird eine Mehrzahl von Formkörper in einem regelmäßigen Setzmuster, insbesondere schachbrettartig, in die Anbaufläche eingesetzt. Die Formkörper haben hierbei einen Abstand von 30 bis 70 cm, bevorzugt einen Abstand von 40 bis 50 cm und besonders bevorzugt einen Abstand von 45 cm zueinander. Feldversuche haben gezeigt, dass in den genannten Abstandsbereichen in der Anbaufläche innerhalb weniger Jahre ein geschlossenes Rhizomcluster ausgebildet wird, welches zum einen Miscanthus mit guten Wuchseigenschaften bereitstellt, geringe Auswinterungsverluste zeigt und über viele Jahre gleichmäßig hohen Ertrag bietet. Zum anderen können die Formkörper in besonders einfacher Weise gewonnen werden, wenn das Rhizomcluster geschlossen ist. Es existieren dann keine Bereiche ohne Rhizom, sodass eine vorherige Untersuchung des Bodens bzw. eine Kontrolle der Formkörper auf eingeschlossene Rhizome entbehrlich ist. Insgesamt vereinfacht sich hierdurch die Pflanzgutgewinnung mit der Folge, dass das Verfahren in besonders wirtschaftlicher Weise angewandt werden kann.

Nach einer Weiterbildung der Erfindung werden bei der Gewinnung von Formkörpern aus einem geschlossenen Rhizomcluster im Querschnitt quaderförmige Formkörper mit einer Kantenlänge von näherungsweise 15 cm ausgebildet, indem in das Erdreich sich kreuzende, 15 cm voneinander beabstandete Längsschnitte und Querschnitte eingebracht werden. Jeweils zwei benachbarte Längsschnitte und jeweils zwei benachbarte Querschnitt bilden hierbei eine Längsreihenanordnung von Formkörpern bzw. eine Querreihenanordnung von Formkörpern. Anschließend wird aus jeweils zwei benachbarten Längsreihenanordnungen und aus jeweils zwei benachbarten Querreihenanordnungen unter Ausbildung eines Grundschnitts eine Mehrzahl von Formkörpern gewonnen. Neben diesen zwei benachbarten Längsreihenanordnungen und neben diesen zwei benachbarten Querreihenanordnungen verbleiben Rhizome in der Anbaufläche. Aus diesen Rhizomen kann im Folgenden die Miscanthuspflanze austreiben. Vorteilhaft haben die verbleibenden Rhizome einen makroskopischen Abstand von jeweils 45 cm in Längs- und Querrichtung, sodass hier besonders günstige Eigenschaften für das Heranwachsen der Miscanthuspflanze geschaffen sind. Zusätzlich kann eine Vielzahl von Formkörpern gewonnen werden. Insofern ist es möglich, die Anbaufläche mehrjährig zum Anbau von Miscanthus zu nutzen und zugleich aus eben dieser Anbaufläche Formkörper mit überzähligen Rhizomen zu entnehmen. Hierdurch kann es gelingen, die Anbaufläche in kurzer Zeit um ein Vielfaches zu steigern. Das erfindungsgemässe Verfahren ergibt einen aus einem Rhizomcluster der Miscanthuspflanze gewonnen Formkörper mit einer im Wesentlichen quaderförmigen Grundform. Der Formkörper umfasst Erdreich und wenigstens ein im Wesentlichen vollständig erhaltenes, aus einem Wurzelhauptkörper und hiervon abragenden Haarwurzeln gebildeten Rhizom der Miscanthuspflanze auf. Der Grundkörper besitzt eine Oberseite, eine der Oberseite gegenüberliegende Unterseite und vier Verbindungsseiten, welche zwischen der Oberseite und der Unterseite vorgesehen sind. Eine Länge, eine Breite und eine Tiefe des Grundkörpers betragen jeweils zwischen 10 und 20 cm.

Der besonders Vorteil der Erfindung besteht darin, dass der Formkörper mit dem Rhizom der Miscanthuspflanze in ausgesprochen wirtschaftlicher Weise gewonnen werden kann und aus dem wenigstens einen Rhizom des Formkörpers eine neue Miscanthuspflanze heranwachsen kann. Insofern reduziert sich der finanzielle und operative Aufwand bei der Pflanzgutgewinnung. Zudem können Auswinterungsverluste insbesondere im ersten Jahr der Aufzucht des Miscanthus reduziert werden.

Ausführungsbeispiele werden nachfolgend anhand von Zeichnungen näher erläutert.

Es zeigen:
- Figur 1: einen Querschnitt durch einen im Wesentlichen quaderförmigen Formkörper,
- Figur 2: einen Querschnitt durch das Erdreich mit einem oberflächennahen Rhizomcluster,
- Figur 3: eine Draufsicht auf ein Rhizomcluster der Miscanthuspflanze bei klassischem Anbau (Stand der Technik),
- Figur 4: eine Draufsicht auf ein geschlossenes Rhizomcluster der Miscanthuspflanze, welches nach einem erfindungsgemäßen Anbauverfahren gebildet ist und
- Figur 5: eine Prinzipdarstellung eines erfindungsgemäßen Pflanzgutgewinnungsverfahrens.

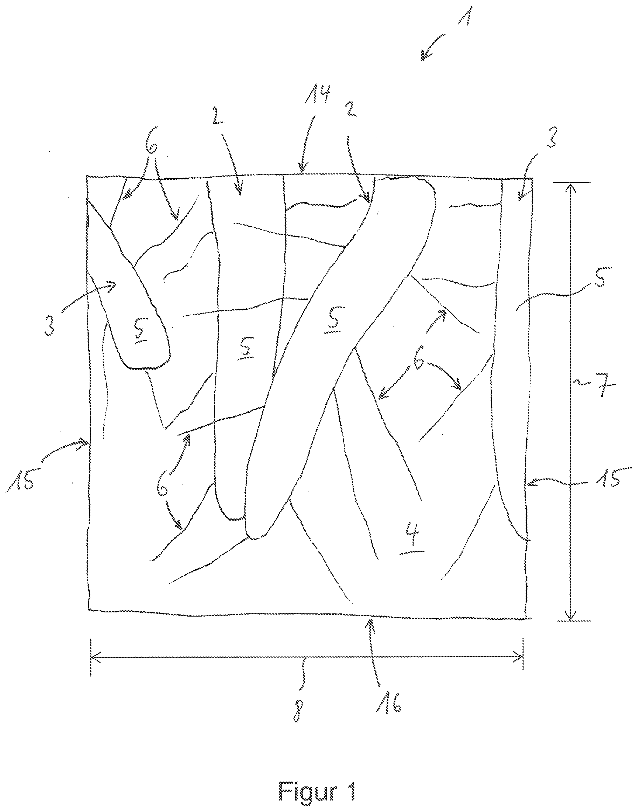

In Abkehr der bisher angewandten Verfahren zur Pflanzgutgewinnung und zum Anbau von Miscanthus sieht die Erfindung vor, die Miscanthuspflanze unter Verwendung eines Formkörpers 1 zu vermehren. Der Formkörper 1 weist wie in Figur 1 dargestellt wenigstens ein Rhizom der Miscanthuspflanze 2, 3 sowie das wenigstens eine Rhizom 2, 3 umgebendes Erdreich 4 auf. Das Rhizom 2, 3 selbst umfasst einen Wurzelhauptkörper 5 sowie eine Vielzahl von Haarwurzeln 6, die von dem Wurzelhauptkörper 5 abragen. Die Haarwurzeln 6 dienen insbesondere der Aufnahme von Nährstoffen und der Versorgung des Rhizoms 2, 3 mit Wasser. Der Formkörper 1 hat eine Oberseite 14, eine Unterseite 16 und vier die Oberseite 14 und die Unterseite 16 miteinander verbindende Verbindungsseiten 15, welche paarweise parallel zueinander angeordnet sind.

Im vorliegenden Ausführungsbeispiel der Erfindung ist der Formkörper 1 quaderförmig ausgebildet. Er weist eine Tiefe 7 und eine der Tiefe 7 entsprechende Breite 8 auf. Zudem entspricht die nicht dargestellte Länge im Wesentlichen der Tiefe 7 und Breite 8. Beispielsweise beträgt die Kantenlänge (Tiefe 7, Breite 8, Länge) des Formkörpers 1 näherungsweise 15 cm. Hierbei ist die Kantenlänge so gewählt, dass in dem Formkörper 1 mit ausreichender Wahrscheinlichkeit wenigstens ein vollständig erhaltenes Rhizom 2 der Miscanthuspflanze enthalten ist. Typischerweise werden dann zusätzlich eine Mehrzahl von nicht vollständigen erhaltenen Rhizomen 3, beispielsweise von im Rahmen der Gewinnung des Formkörpers 1 beschädigten, insbesondere zerschnittenen Rhizomen 3, enthalten sein. Je nach Beschaffenheit des Rhizomclusters 9 kann die Kantenlänge des Formkörpers 1 zwischen 10 und 20 cm betragen, wobei die Würfelform optional ist und jede beliebige Quaderform gewählt werden kann.

Die quaderförmige Struktur des Formkörpers 1 ist ebenfalls nur exemplarisch. Selbstverständlich kann der Formkörper jede beliebige Geometrie aufweisen. Beispielsweise kann der Formkörper einen rechteckigen Querschnitt aufweisen oder zylinderförmig bzw. kugelstumpfförmig geformt sein.

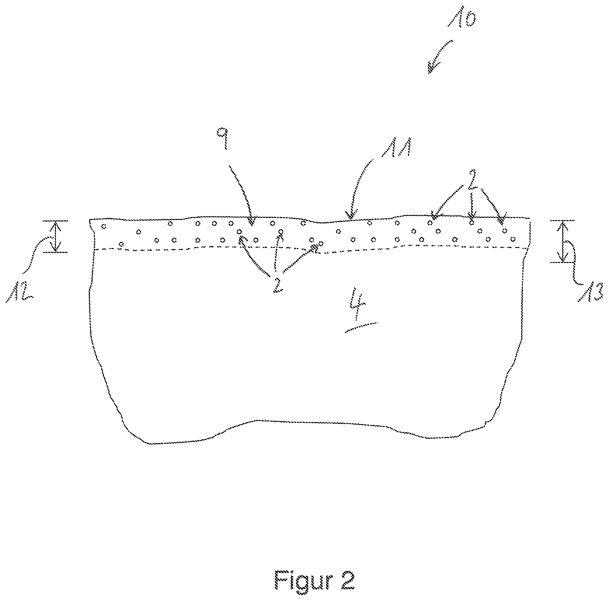

Figur 2 zeigt einen Querschnitt durch ein Rhizomcluster 9 der Miscanthuspflanze. Der Rhizomcluster 9 ist durch eine Vielzahl von intakten Rhizomen 2 im oberflächennahen Bereich der Anbaufläche 10 gebildet. Es erstreckt sich von einer Oberfläche 11 der Anbaufläche 10 im oberflächennahen Bereich bis hinab zu einer Wuchstiefe 12, welche üblicherweise im Bereich von ca. 10 bis 12 cm liegt. Darunter liegendes Erdreich 4 ist im Wesentlichen frei von Rhizomen 2.

In besonders einfacher Weise kann der Formkörper 1 aus dem Rhizomcluster 9 gewonnen werden. Hierzu wird der Formkörper 1 aus dem Rhizomcluster 9 geschnitten. Eine Mindesttiefe 13 des Schnitts, welche zugleich die Tiefe 7 des Formkörpers 1 definiert, ist dabei so gewählt, dass der Schnitt unterhalb der Wuchstiefe 12 geführt wird. Auf diese Weise kann gewährleistet werden, dass die Rhizome 2 im Bereich der Unterseite 16 weitgehend unbeschädigt bleiben und insbesondere auch die Haarwurzeln 6 vollständig oder weitgehend vollständig erhalten sind.

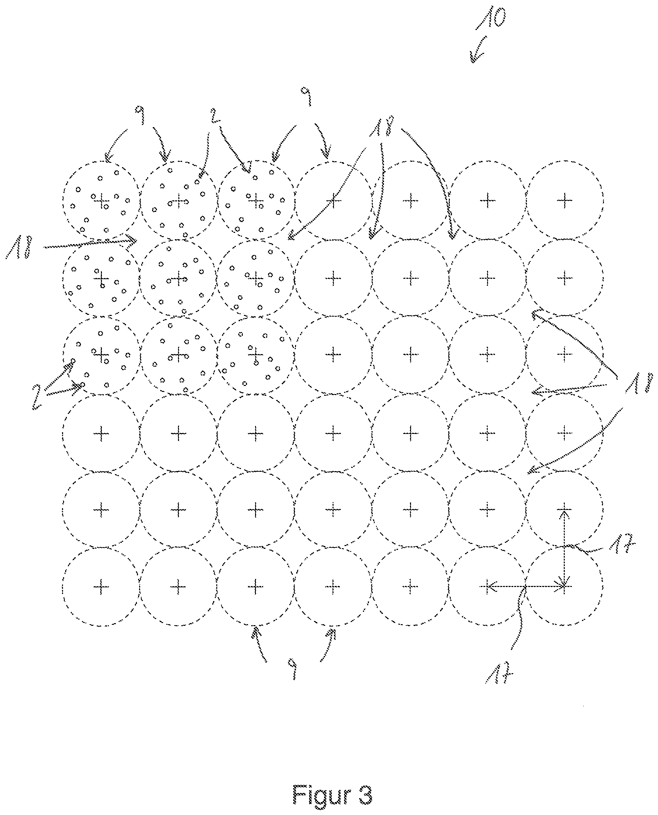

Figur 3 zeigt eine Draufsicht auf das Rhizomcluster 9, welches bei den heute üblichen Anbauverfahren und den Stand der Technik ausgebildet wird. Da intial eine Mehrzahl von Jungpflanzen bzw. Rhizomen in einem Rasterabstand 17 von 1 x 1 Meter in die Anbaufläche 10 eingesetzt werden und die Wurzeln der Miscanthuspflanze in einem Durchmesserbereich von ca. 50 bis 60 cm wuchern, bilden sich einzelne Rhizomcluster 9 aus, wobei zwischen den Rhizomclustern 9 flächig erstreckte Freiräume 18 vorgesehen sind, in denen keine Rhizome vorhanden sind. Eine so gestaltete Anbaufläche 10 ist für die erfindungsgemäße Pflanzgutgewinnung insofern problematisch, als das im Bereich der Freiflächen 18 gewonnene Formkörper unbrauchbar sind, da in dem Formkörpern 1 dann keine Rhizome 2, 3 und insbesondere keine vollständig erhaltenen Rhizome 2 vorhanden sind. Formkörper 1 mit vollständig erhaltenen Rhizomen 2 können demzufolge ausschließlich im Bereich der lokal ausgebildeten Rhizomcluster 9 gewonnen werden. Bei der Herstellung der Formkörper 1 muss insofern die Bodenbeschaffenheit und das Vorhandensein von Rhizomen 2, 3 geprüft werden. Insofern ist ein Selektieren der Formkörper 1 erforderlich.

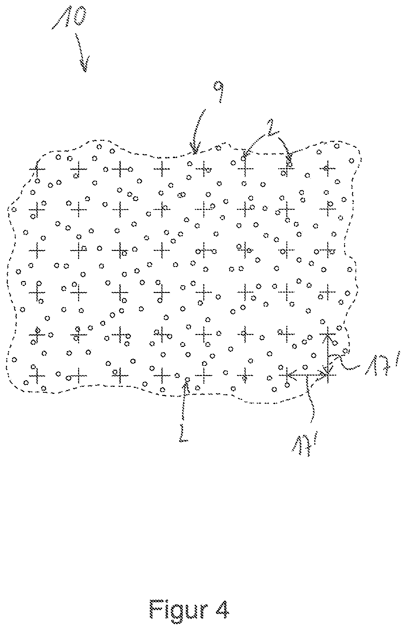

Wenn stattdessen das Rastermaß 17 im Bereich von 30 bis 70 cm, vorzugsweise im Bereich von 40 bis 50 cm und besonders bevorzugt mit 45 cm ausgebildet wird, bildet sich - wie in Figur 4 gezeigt - über die gesamte Anbaufläche 10 ein einziges, geschlossenes Rhizomcluster 9. In diesem Fall können Formkörper 1 an einer beliebigen Stelle der Anbaufläche 10 entnommen werden, wobei stets eine ausreichend hohe Wahrscheinlichkeit vorhanden ist, dass wenigstens ein vollständig erhaltenes Rhizom 2 in dem Formkörper 1 eingeschlossen ist. Zugleich hat sich gezeigt, dass der Biomasseertrag bei dem geringen Clusterabstand 17 gleichbleibend hoch ist und sich ein geschlossener Miscanthuswuchs ausbildet. Insofern ist das Clustermaß 17 im Bereich von 30 bis 70 cm gleichermaßen für die Vermehrung der Miscanthuspflanze und für deren ertragreichen Anbau vorteilhaft.

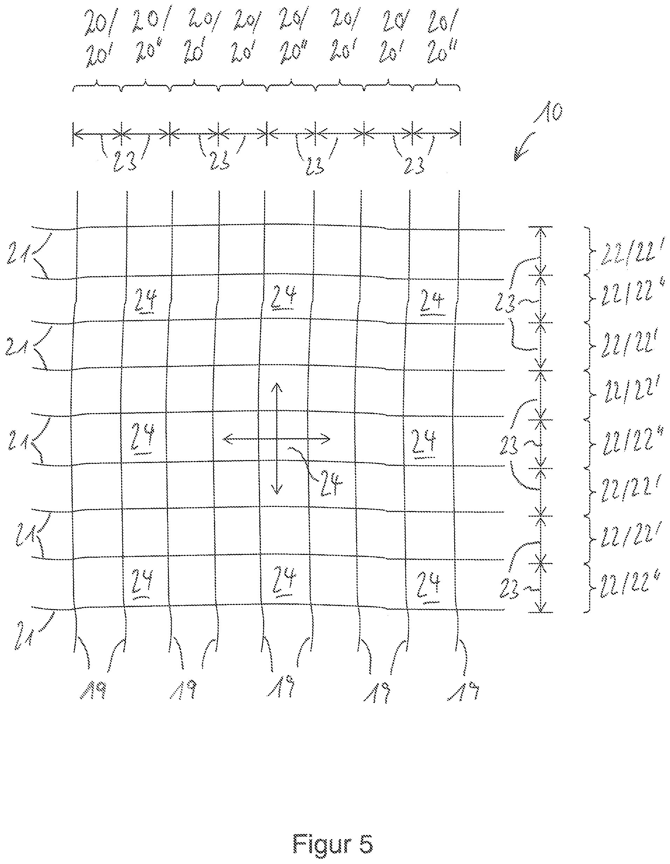

Ein spezielles Verfahren zur Gewinnung von Pflanzgut nach Figur 5 sieht vor, dass die Anbaufläche 10 zunächst mit einer Vielzahl von Längsschnitten 19 versehen wird, wobei die Längsschnitte 19 zueinander im Wesentlichen parallel ausgebildet sind und zwei benachbarte Längsschnitte 19 in ihrer Mitte jeweils eine Längsreihenanordnung 20 bilden. Anschließend wird eine Mehrzahl Querschnitte 21 ausgebildet, welche ebenfalls zueinander parallel sind und die Längsschnitte 19 kreuzen. Zwischen zwei benachbarten Querschnitten 21 wird hierbei eine Querausnehmung 22 gebildet. Die Anbaufläche 10 erhält hierdurch in der Draufsicht ein schachbrettartiges Muster, wobei benachbarte Längsschnitte 19 und benachbarte Querschnitte 21 beispielsweise jeweils einen Abstand von 15 cm aufweisen.

Zur Bildung von Formkörpern 1 wird anschließend im Bereich von zwei benachbarten Längsreihenanordnungen 20' ein Grundschnitt im Wesentlichen parallel zur Oberseite 14 der Formkörper 1 ausgeführt mit der Folge, dass die so gebildeten Formkörper 1 von der Anbaufläche 10 getrennt und entnommen werden können. In gleicher Weise wird im Bereich von zwei benachbarten Querreihenanordnungen 22 der Grundschnitt ausgeführt. Sodann können auch hier die so gebildeten Formkörper 1 entnommen werden. In der Folge bleibt in jeder dritten Längsreihenanordnung 20" und in jeder dritten Querreihenanordnung 22" ein Wuchsbereich 24 der Anbaufläche 10 erhalten. Aus diesem Wuchsbereich 24, der mit ausreichender Wahrscheinlichkeit ebenfalls ein vollständig erhaltenes Rhizom 2 aufweist, schlägt im nächsten Wuchszyklus eine Miscanthuspflanze aus.

So die Längsschnitte 19 und die Querschnitte 21 einen Abstand 23 von 15 cm aufweisen, befinden sich die Wuchsbereiche 24 in einem regelmäßigen Raster mit dem Rastermaß 17 von 45 cm. Dies ist wie vorstehend dargelegt für den Anbau von Miscanthus auf der Anbaufläche 10 optimal. Die Kantenlänge der Wuchsbereiche 24 beträgt näherungsweise 15 cm. Optional können im Bereich der Längsreihenanordnung 20' und der Querreihenanordnung 22', in denen Formkörper 1 von der Anbaufläche 10 entnommen wurden, entstandene rinnenförmige Ausnehmungen durch Einbringen von Erde, Sand oder beliebigen anderen Füllstoffen ausgefüllt werden.

## Patentansprüche

1. Verfahren zur Pflanzgutgewinnung und Anpflanzung von Miscanthus, wobei wenigstens ein Rhizom der Miscanthuspflanze in eine Anbaufläche eingebracht wird und mindestens eine Miscanthuspflanze aus dem wenigstens einem Rhizom austreibt, wobei zum Einbringen des wenigstens einem Rhizoms (2, 3) in die Anbaufläche ein das wenigstens eine Rhizom (2,3) sowie ein das wenigstens eine Rhizom (2,3) umgebendes Erdreich (4) aufweisender Formkörper (1) in die Anbaufläche (10) eingesetzt wird, **dadurch gekennzeichnet, dass** zur Gewinnung von regelmäßig geformten Formkörpern (1) wenigstens zwei im Wesentlichen parallel zueinander orientierte Längsschnitte (19) mit einer vorgegebenen Mindesttiefe in das das Rhizom (2, 3) umgebende Erdreich (4) eingebracht werden, dass dann eine Mehrzahl von im Wesentlichen parallelen Querschnitten (21) mit der vorgegebenen Mindesttiefe in das das Rhizom (2, 3) umgebende Erdreich (4) eingebracht werden, wobei die Längsschnitte (19) und die Querschnitte (21) einander kreuzen, und dass dann zum Lösen des Formkörpers (1) ein Grundschnitt ausgeführt wird, wobei durch den Grundschnitt eine Unterseite (16) des Formkörpers (1) ausgebildet wird, die einer durch eine Oberfläche (11) des Erdreichs (4) gebildeten Oberseite (14) des Formkörpers (1) gegenüberliegt.

2. Verfahren nach Anspruch 1, **dadurch gekennzeichnet, dass** zur Gewinnung des Formkörpers (1) derselbe aus einem in dem Erdreich (4) gebildeten Rhizomclusters (9) herausgetrennt und vereinzelt wird.

3. Verfahren nach Anspruch 1 oder 2, **dadurch gekennzeichnet, dass** Außenabmessungen des Formkörpers (1) derart gewählt werden, dass sich in dem Formkörper (1) mit einer ausreichend hohen Wahrscheinlichkeit wenigstens ein unbeschädigtes, vollständig erhaltenes Rhizom (2) der Miscanthuspflanze findet.

4. Verfahren nach einem der Ansprüche 1 bis 3, **dadurch gekennzeichnet, dass** die Längsschnitte (19) und/oder die Querschnitte (21) und/oder der Grundschnitt mit einer landwirtschaftlichen Fräse und/oder mit einem Pflug und/oder mit einer Schneide ausgebildet werden.

5. Verfahren nach einem der Ansprüche 1 bis 4, **dadurch gekennzeichnet, dass** die Mindesttiefe für den Längsschnitt (19) und den Querschnitt (21) so gewählt wird, dass die Unterseite (16) des Formkörpers (1) unterhalb einer üblichen Wuchstiefe des Rhizomclusters (9) gebildet wird.

6. Verfahren nach einem der Ansprüche 1 bis 5, **dadurch gekennzeichnet, dass** als regelmäßig geformter Formkörper (1) ein im Wesentlichen quaderförmiger Formkörper (1) ausgebildet wird mit einer Breite (8) zwischen 10 und 20 cm, mit einer Tiefe (7) zwischen 10 und 20 cm und mit einer Länge zwischen 10 und 20 cm.

7. Verfahren nach einem der Ansprüche 1 bis 6, **dadurch gekennzeichnet, dass** eine Mehrzahl von Formkörpern (1) in einem regelmäßigen Setzmuster in die Anbaufläche (10) eingesetzt werden, wobei die Formkörper (1) zueinander einen Abstand (Rastermaß 17, 17') von 30 bis 70 cm, bevorzugt einen Abstand von 40 bis 50 cm und besonders bevorzugt einen Abstand von 45 cm aufweisen.

8. Verfahren nach einem der Ansprüche 1 bis 7, **dadurch gekennzeichnet, dass** bei der Gewinnung von Formkörpern (1) aus einer ein Rhizomcluster (9) ausweisende Anbaufläche (10) im Querschnitt quaderförmige Formkörper (1) mit einer Kantenlänge von 15 cm ausgebildet werden, indem in der Anbaufläche (10) sich kreuzende, 15 cm beabstandete Längsschnitte (19) und Querschnitte (21) vorgesehen werden, wobei jeweils zwei benachbarte Längsschnitte (19) eine Längsreihenanordnung (20, 20', 20") von Formkörpern (1) und zwei benachbarte Querschnitte (21) eine Querreihenanordnung (22, 22', 22") von Formkörpern (1) bilden, und dass dann aus jeweils zwei benachbarten Längsreihenanordnungen (20') und aus jeweils zwei benachbarten Querreihenanordnungen (22') unter Ausbildung eines Grundschnitts Formkörper (1) gewonnen werden, während weitere Formkörper (1) in einer neben den zwei benachbarten Längsreihenanordnungen (20') vorgesehenen dritten Längsreihenanordnung (20") und in einer neben den zwei benachbarten Querreihenanordnungen (22') vorgesehenen dritten Querreihenanordnung (22") in der Anbaufläche (10) verbleiben.

## Claims

1. Method for obtaining plant material and planting *miscanthus*, wherein at least one rhizome of the *miscanthus* plant is introduced into a cultivated area and at least one *miscanthus* plant sprouts from the at least one rhizome, wherein, in order to introduce the at least one rhizome (2, 3) into the cultivated area, a shaped body (1) that comprises the at least one rhizome (2, 3) and also soil (4) that surrounds the at least one rhizome (2, 3) is planted in the cultivated area (10), **characterised in that**, in order to obtain uniformly-shaped shaped bodies (1), at least two longitudinal cuts (19) that are oriented essentially parallel to one another are made at a predetermined minimum depth in the soil (4) that surrounds the rhizome (2, 3), that a plurality of transverse cuts (21) that are essentially parallel to one another are made at a predetermined minimum depth into the soil (4) that is surrounding the rhizome (2, 3), wherein the longitudinal cuts (19) and the transverse cuts (21) cross one another, and that a base cut is made in order to loosen the shaped body (1), wherein an underside (16) of the shaped body (1) is provided by means of the base cut and said underside lies opposite an upper side (14) of the shaped body (1), said upper side being formed by means of an upper surface (11) of the soil (4).

2. Method according to claim 1, **characterised in that**, in order to obtain the shaped body (1), it is separated from a rhizome cluster (9) that is formed in the soil (4) and isolated.

3. Method according to claim 1 or 2, **characterised in that** outer dimensions of the shaped body (1) are selected in such a manner that there is a sufficiently high probability of the shaped body (10) comprising at least one undamaged, completely preserved rhizome (2) of the *miscanthus* plant.

4. Method according to any one of the claims 1 to 3, **characterised in that** the longitudinal cuts (19) and/or the transverse cuts (21) and/or the base cut is performed using an agricultural rotary hoe and/or using a plough and/or using a cutter.

5. Method according to any one of the claims 1 to 4, **characterised in that** the minimum depth for the longitudinal cut (19) and the transverse cut (21) is selected in such a manner that the underside (16) of the shaped body (1) is formed below a typical growth depth of the rhizome cluster (9).

6. Method according to any one of the claims 1 to 5, **characterised in that** an essentially cube-shaped shaped body (1) is provided as a regularly formed shaped-body (1), said shaped body having a width (8) between 10 and 20 cm, having a depth (7) between 10 and 20 cm and having a length between 10 and 20 cm.

7. Method according to any one of the claims 1 to 6, **characterised in that** a plurality of shaped bodies (1) are planted in a regular planting pattern in the cultivated area (10), wherein the shaped bodies (1) are spaced from one another (grid dimensions 17, 17') at a distance of 30 to 70 cm, preferably spaced at a distance of 40 to 50 cm and particularly preferably at a distance of 45 cm.

8. Method according to any one of the claims 1 to 7, **characterised in that** when the shaped bodies (1) are being obtained from a cultivated area (10) that comprises a rhizome cluster (9), shaped bodies (1) that have a cube-shaped cross section and an edge length of 15cm are provided **in that** longitudinal cuts (19) and transverse cuts (21) that are spaced 15cm from one another and that intersect one another are provided in the cultivated area (10), wherein in each case two adjacent longitudinal cuts (19) form a longitudinal row arrangement (20, 20',20") of shaped-bodies (1) and two adjacent transverse cuts (21) form a transverse row arrangement (22, 22', 22") of shaped bodies (1), and that shaped bodies (1) are obtained from in each case two adjacent longitudinal row arrangements (20') and in each case two adjacent transverse row arrangements (22') while further shaped bodies (1) remain in the cultivated area (10) in a third longitudinal row arrangement (20") that is provided adjacent to the two adjacent longitudinal row arrangements (20') and in a third transverse row arrangement (22") that is provided adjacent to the two adjacent transverse row arrangements (22').

## Revendications

1. Procédé destiné à la production de plants et à la plantation de *miscanthus*, dans lequel au moins un rhizome de la plante de *miscanthus* est introduit dans une surface de culture et dans lequel au moins une plante de *miscanthus* germe à partir de l'au moins un rhizome, dans lequel pour introduire l'au moins un rhizome (2, 3) dans la surface de culture, un corps façonné (1) présentant l'au moins un rhizome (2, 3) ainsi qu'une terre (4) entourant l'au moins un rhizome (2, 3) est inséré dans la surface de culture (10), **caractérisé en ce que** pour produire des corps façonnés (1) de forme régulière, au moins deux coupes longitudinales (19) orientées essentiellement parallèlement l'une à l'autre, ayant une profondeur minimale prédéfinie, sont réalisées dans la terre (4) entourant le rhizome (2, 3), **en ce qu'**ensuite une pluralité de coupes transversales (21) essentiellement parallèles, ayant la profondeur minimale prédéfinie, sont réalisées dans la terre (4) entourant le rhizome (2, 3), les coupes longitudinales (19) et les coupes transversales (21) s'entrecroisant, et **en ce qu'**une coupe de base est réalisée pour détacher le corps façonné (1), un côté inférieur (16) du corps façonné (1) étant réalisé en raison de la coupe de base, lequel côté inférieur est situé à l'opposé d'un côté supérieur (14) du corps façonné (1), formé par une surface (11) de la terre (4).

2. Procédé selon la revendication 1, **caractérisé en ce que** pour produire le corps façonné (1), la même motte de rhizomes (9) formée à partir d'une motte de rhizomes formée dans la terre (4) est retirée et repiquée.

3. Procédé selon la revendication 1 ou 2, **caractérisé en ce que** des dimensions extérieures du corps façonné (1) sont sélectionnées de manière à ce qu'au moins un rhizome (2) de la plante de *miscanthus*, non abimé, obtenu de manière complète, se trouve dans le corps façonné (1) avec une probabilité suffisamment élevée.

4. Procédé selon l'une quelconque des revendications 1 à 3, **caractérisé en ce que** les coupes longitudinales (19) et/ou les coupes transversales (21) et/ou la coupe de base sont réalisées à l'aide d'une fraise agricole et/ou d'une charrue et/ou d'une coupeuse.

5. Procédé selon l'une quelconque des revendications 1 à 4, **caractérisé en ce que** la profondeur minimale pour la coupe longitudinale (19) et la coupe transversale (21) est sélectionnée de manière à ce que le côté inférieur (16) du corps façonné (1) soit formé en dessous d'une profondeur de croissance usuelle de la motte de rhizomes (9).

6. Procédé selon l'une quelconque des revendications 1 à 5, **caractérisé en ce qu'**un corps façonné (1) essentiellement en forme de parallélépipède est réalisé comme corps façonné (1) de forme régulière, ayant une largeur (8) comprise entre 10 et 20 cm, ayant une profondeur (7) comprise entre 10 et 20 cm et ayant une longueur comprise entre 10 et 20 cm.

7. Procédé selon l'une quelconque des revendications 1 à 6, **caractérisé en ce qu'**une pluralité de corps façonnés (1) sont insérés dans la surface de culture (10) dans un modèle de pose régulier, dans lequel procédé les corps façonnés (1) présentent un écart (dimension d'espacement 17, 17') les uns par rapport aux autres de 30 à 70 cm, de préférence un écart de 40 à 50 cm, et de manière particulièrement préférée un écart de 45 cm.

8. Procédé selon l'une quelconque des revendications 1 à 7, **caractérisé en ce que** lors de la production de corps façonnés (1) à partir d'une surface de culture (10) présentant une motte de rhizomes (9), des corps façonnés (1) parallélépipédiques en section transversale sont réalisés ayant une longueur d'arête de 15 cm du fait que des coupes longitudinales (19) et des coupes transversales (21) s'entrecroisant avec 15 cm d'écart sont ménagées dans la surface de culture (10), dans lequel procédé respectivement deux coupes longitudinales (19) avoisinantes forment un agencement de rangs longitudinaux (20, 20', 20") de corps façonnés (1) et dans lequel deux coupes transversales (21) avoisinantes forment un agencement de rangs transversaux (22, 22', 22") de corps façonnés (1), et **en ce qu'**ensuite des corps façonnés (1) sont produits à partir de respectivement deux agencements de rangs longitudinaux (20') avoisinants et à partir de respectivement deux agencements de rangs transversaux (22') avoisinants en formant une coupe de base, alors que d'autres corps façonnés (1) restent dans la surface de culture (10) dans un troisième agencement de rangs longitudinaux (20") ménagé à côté des deux agencements de rangs longitudinaux (20') avoisinants.
